# EUROPÄISCHE PATENTSCHRIFT

(11) **EP 0 808 767 B1**
(45) Veröffentlichungstag und Bekanntmachung des Hinweises auf die Patenterteilung: **06.10.2004**
(21) Anmeldenummer: 97107427.3
(22) Anmeldetag: 06.05.1997
(51) Int. Cl.: B64C 27/35, F16F 1/40, B64C 27/33, B64C 27/51

(54) **Rotorblattanschluss**
Rotor blade connection
Connexion pour une pale de rotor

(30) Priorität: 21.05.1996 DE 19620427
(43) Veröffentlichungstag der Anmeldung: 26.11.1997
(73) Patentinhaber: Eurocopter Deutschland GmbH, 86609 Donauwörth (DE)
(72) Erfinder: Bansemir, Horst Dr,, 81825 München (DE); Hausmann, Gerhard, 81737 München (DE)
(74) Vertreter: Hummel, Adam

(56) Entgegenhaltungen:
- EP-A- 0 019 041
- EP-A- 0 033 771
- EP-A- 0 323 857
- GB-A- 1 259 802
- US-A- 5 378 974
- W. BUCHS ET AL: "STRUCTURAL DESIGN AND ANALYSIS OF COMPOSITE HELICOPTER COMPONENTS" VERTICA, Bd. 11, Nr. 3, 1987, Seiten 407-424, XP002060956 EXETER, DEVON, GB

## Beschreibung

Die Erfindung bezieht sich auf einen Rotorblattanschluß, insbesondere für einen Hubschrauber, nach dem Oberbegriff des Patentanspruchs 1.

Hubschrauber mit einem gelenk- und lagerlosen Rotorblattanschluß enthalten üblicherweise einen zwischen auftriebserzeugendem Flügelabschnitt und Rotornabe angeordneten Tragholm, auch "Flexbeam" genannt, der die Flieh- und Querkräfte sowie Biege- und Torsionsmomente sicher von der Blattwurzel an die Rotornabe übertragen und zugleich um zwei Achsen biegeelastisch, nämlich zumeist in einem nabenseitigen Bereich schlag- und in einem flügelseitigen Bereich schwenkelastisch sowie zur Ermöglichung der Blattwinkelverstellbewegungen um die Längsachse drillweich ausgebildet sein muß. Die Schwingungsdämpfung eines derartigen Tragholms erfolgt mit Hilfe eines Elastomerdämpfers, der entweder als gesonderte Baueinheit zwischen Rotornabe und Tragholm angeordnet oder, wie aus der DE 25 58 709 oder der DE 27 58 086 bekannt, nach Art eines oberflächenseitigen Belages unmittelbar auf den Tragholm aufgebracht ist. Dabei besteht jedoch die Schwierigkeit, einen Dämpfer mit einem ausreichend großen Elastomervolumen so an die Tragholmstruktur anzubinden, daß die einzelnen Elastomerschichten unter der Wirkung der Rotorblatt-Schwenkbewegungen möglichst homogen schubverzerrt werden, wie dies erforderlich ist, um eine wirksame Dämpfung der teilweise sehr kleinen Schwenkbiegeverformungen des Tragholms zu erhalten.

Aufgabe der Erfindung ist es, einen Rotorblattanschluß der eingangs genannten Art zu schaffen, bei dem die Dämpfungseinrichtung auf einbaugünstige Weise und mit einem großen Elastomervolumen auf einer begrenzten Tragholmlänge ohne Beeinträchtigung des geforderten Festigkeits- und Steifigkeitsverhaltens des Tragholms so angeordnet ist, daß eine hochgradige Strukturdämpfung garantiert wird.

Diese Aufgabe wird erfindungsgemäß durch den im Patentanspruch 1 gekennzeichneten Rotorblattanschluß gelöst.

Erfindungsgemäß wird durch die Anordnung der Dämpfungseinrichtung in den für die erforderliche Drillelastizität ohnehin benötigten, schlitzförmigen Einschnitten des Tragholms eine platzsparende Unterbringung eines großen Elastomervolumens in der Tragholmstruktur selbst erreicht, mit der Besonderheit, daß durch die Aufteilung in eine Vielzahl von in Richtung der Tragholm-Hauptbiegeebene verlaufenden Schlitzen und Einzeldämpfern eine äußerst homogene Schubverzerrung und großflächige Anbindung der einzelnen Elastomerschichten unmittelbar an die biegeverformten Tragholmabschnitte und dadurch eine hochgradige Dämpfungswirkung bei zugleich langer Lebensdauer des Elastomerdämpfers sichergestellt wird.

In weiterer vorteilhafter Ausgestaltung der Erfindung sind die Zwischenschichten der Einzeldämpfer gemäß Anspruch 2 jeweils über singuläre Befestigungsstellen an der Tragholmstruktur fixiert, wodurch ungewollte Relativverschiebungen zwischen der Tragholmstruktur und den Zwischenschichten und somit störende Schubverzerrungen der Elastomerschichten, etwa unter Fliehkraftwirkung, verhindert werden, gleichzeitig aber die Dämpfungswirkung der einzelnen Elastomerdämpfer in vollem Umfang erhalten bleibt.

Zwar können sich die Tragholmschlitze und Einzeldämpfer durchgehend über den gesamten biegeelastischen Tragholmbereich erstrecken, nach Anspruch 3 empfiehlt es sich jedoch, die Tragholmschlitze in Holm-Längsrichtung zu unterteilen und in jedem Teilschlitz einen Einzeldämpfer anzuordnen, um so das Festigkeits-, Steifigkeits- und Dämpfungsverhalten des Tragholms feinfühlig aufeinander abstimmen zu können.

In weiterer, besonders bevorzugter Ausgestaltung der Erfindung ist gemäß Anspruch 4 die Flächendehnung der Zwischenschichten elektrisch steuerbar, so daß die Schubverzerrung der Elastomerschichten nicht allein von der Größe der Biegeverformung des Tragholms abhängig, sondern zusätzlich durch äußere Steuereingriffe beeinflußbar ist. Hierdurch läßt sich die Dämpfungswirkung vor allem im Bereich kleiner Biegeschwingungen des Tragholms wesentlich verbessern. Im Hinblick auf eine baulich einfache Steuerung der Flächendehnung der Zwischenschichten sind diese gemäß Anspruch 5 vorzugsweise mit elektrisch angesteuerten Piezoelementen belegt. In Verbindung mit Elastomerdämpfern können solche Piezobeläge wegen ihrer hohen Biegeempfindlichkeit im allgemeinen zwar nur in beschränktem Umfang verwendet werden, im Rahmen der Erfindung sind sie jedoch aufgrund ihrer speziellen Flächenausrichtung - ebenso wie die Zwischenschichten - nur sehr geringen Biegeverformungen ausgesetzt und daher problemlos zur Steuerung der Dämpfungswirkung einsetzbar. Aus Gründen einer selbsttätigen Steuerung mit einer erwünschten Steuercharakteristik ist der Tragholm gemäß Anspruch 6 vorzugsweise mit einer die Biegeschwingungen des Tragholms aufnehmenden Sensoranordnung und einer die Piezoelemente nach Maßgabe der Sensorsignale aktivierenden Steuereinheit versehen.

Wie bereits erwähnt, müssen bei einem Hubschrauber-Rotorblattanschluß vor allem die Schwenkbiegeschwingungen des Tragholms gedämpft werden, und dementsprechend sind die elastomeren Einzeldämpfer nach Anspruch 7 zweckmäßigerweise in Richtung der Schwenkbiegeebene des schwenkelastischen Tragholmabschnitts angeordnet.

Der Tragholm und/oder die Zwischenschichten können aus Metall oder, wie nach Anspruch 8 wegen des günstigen Steifigkeits- und Festigkeitsverhaltens bevorzugt, aus Faserverbundwerkstoff bestehen.

Die Erfindung wird nunmehr anhand von Ausführungsbeispielen in Verbindung mit den Zeichnungen näher erläutert. Es zeigen in stark schematisierter Darstellung:
- **Fig. 1**: einen Blattanschluß für ein Hubschrauber-Rotorblatt in der Aufsicht zusammen mit den verschiedenen Querschnitten;
- **Fig. 2**: eine vergrößerte Darstellung des schwenkelastischen Tragholmabschnitts im Querschnitt;
- **Fig. 3**: die Anordnung von in Holm-Längsrichtung verteilten Einzeldämpfern; und
- **Fig. 4**: eine der Fig. 3 entsprechende Darstellung eines Rotorblattanschlusses mit elektrisch steuerbarer Dämpfungswirkung.

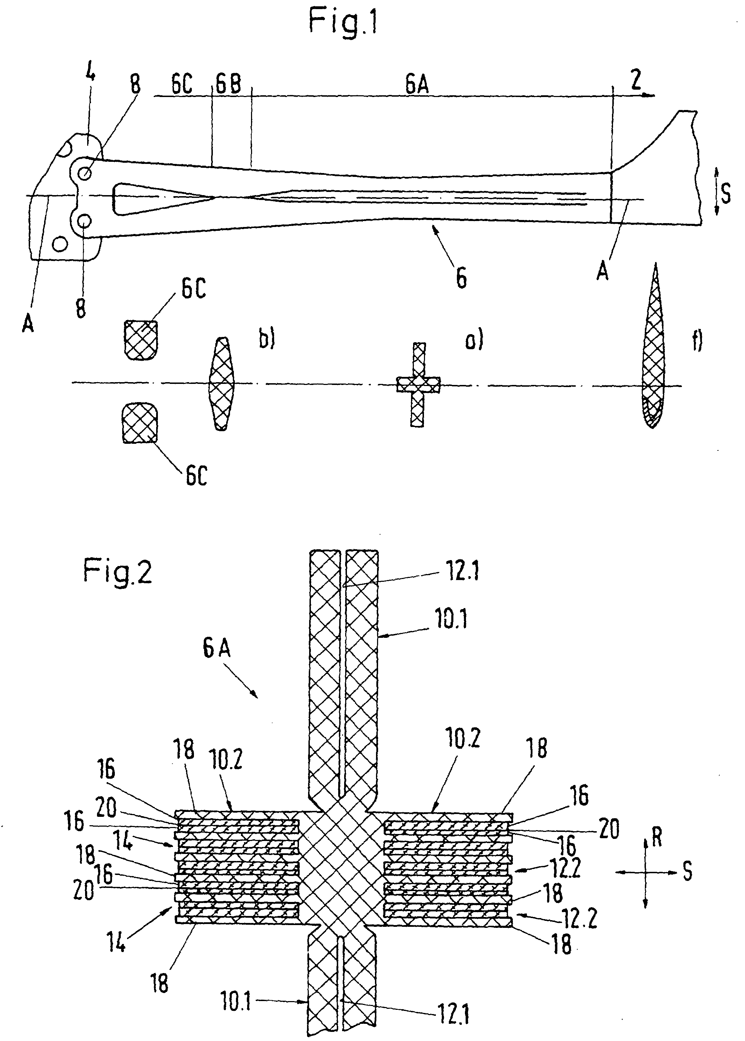

Der in den Fig. für einen gelenk- und lagerlosen Hubschrauber-Rotor gezeigte Blattanschluß enthält einen zwischen auftriebserzeugendem Flügelabschnitt 2 und Rotornabe 4 angeordneten Tragholm 6 aus Faserverbundwerkstoff, der die Flieh- und Querkräfte sowie Biege- und Torsionsmomente sicher von der Blattwurzel an die Rotornabe 4 übertragen und zugleich das fiktive Schlag- und Schwenkgelenk und Blattwinkellager bilden muß. Zu diesem Zweck besteht der Tragholm 6 aus einem ersten Holmabschnitt 6A, der an den Flügelabschnitt 2 (Flügelprofil f gemäß Fig. 1) angrenzt und einen kreuzförmigen, in Schwenkrichtung S relativ biegeelastischen, in Schlagrichtung R jedoch vergleichsweise biegesteifen Querschnitt a besitzt, sowie einem an den schwenkelastischen Holmabschnitt 6A nabenseitig anschließenden, zweiten Holmabschnitt 6B mit einem relativ schwenkbiegesteifen, in Schlagrichtung R jedoch biegeelastischen Querschnittsprofil b, der zur Nabe 4 hin in eine Doppelschlaufe 6C übergeht, durch die der Tragholm 6 mit Hilfe von Verbindungsbolzen 8 an die Rotornabe 4 angeschlossen ist.

Zur Erzielung der erforderlichen Drillelastizität um die Holmlängsachse A sind gemäß Fig. 2 in den kreuzförmig angeordneten Tragarmen 10.1 und 10.2 des Holmabschnitts 6A schlitzförmige Einschnitte 12.1 bzw. 12.2 vorgesehen, von denen die Einschnitte 12.2 auf die nachfolgend erläuterte Weise mit einer elastomeren Dämpfungseinrichtung für die Schwenkbiegeschwingungen des Tragholms 6 kombiniert sind. Die Einschnitte 12.2 bestehen aus einer Vielzahl von in Schwenkrichtung S parallel zueinander verlaufenden Schlitzen geringer Schlitzbreite, die sich vom Außenrand der Tragarme 10.2 ins Innere der Tragholmstruktur erstrecken. In jedem dieser Schlitze 12.2 befindet sich ein elastomerer Einzeldämpfer 14, dessen Elastomerschichten 16 mit den angrenzenden, tragenden Wandabschnitten 18 der Holmarme 10.2 sowie jeweils über eine Zwischenschicht 20 untereinander flächig, etwa durch Vulkanisieren, verbunden sind, wobei die Zwischenschichten 20, die ebenfalls aus Faserverbundmaterial bestehen können, in Richtung ihrer Flächenerstreckung so steif ausgebildet sind, daß sie an den Schwenkbiegeverformungen des Tragholms 6 nicht teilnehmen. Die Dicke der Elastomerschichten 16 ist möglichst gering, wird jedoch unter Berücksichtigung der örtlichen Schubverzerrungen ggf. variabel und mindestens so groß gewählt, daß die Dämpfungswirkung über die geforderte Lebensdauer in vollem Umfang erhalten bleibt.

Durch die Relativverschiebung zwischen der Schwenkbiegeverformung der tragenden Wandabschnitte 18 und den steifen Zwischenschichten 20 werden in den Elastomerschichten 16 Schubverzerrungen erzeugt, die mit Dissipationsarbeit verbunden sind. Aus dem großen Elastomervolumen sämtlicher Elastomerschichten 16 und der Höhe und Homogenität der Schubverzerrungsverteilung ergibt sich eine hohe Dämpfungsleistung und gleichzeitig erfüllt der beschriebene Rotorblattanschluß die Forderungen bezüglich Torsionsweichheit, Zugsteifigkeit sowie Biegeeigenschaften.

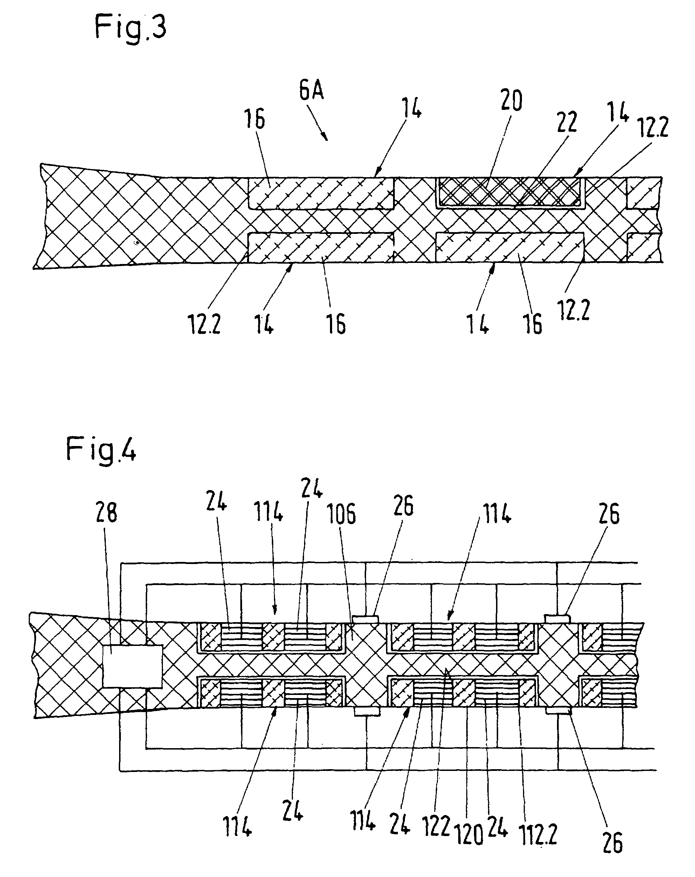

Fig. 3 zeigt die Möglichkeit, die Zwischenschichten 20 über eine singuläre Befestigungsstelle 22 an der Tragholmstruktur 6 zu fixieren. Ferner erstrecken sich bei dieser Ausführungsform die Schlitze 12.2 und Einzeldämpfer 14 nicht über die gesamte Länge des schwenkelastischen Holmabschnitts 6A, sondern sind in Holm-Längsrichtung in mehrere, jeweils durch die Kernstruktur des Tragholms 6 voneinander getrennte Teilschlitze bzw. -dämpfungssegmente unterteilt. Hierdurch läßt sich eine feinfühlige Abstimmung von Dämpfungsverhalten und Schwenkkinematik des Tragholms 6 erreichen.

Bei der Ausführungsform gemäß Fig. 4 ist die passive mit einer aktiven Schwenkdämpfung kombiniert, wobei die Schlitz- und Dämpferanordnung weitgehend mit derjenigen nach den Fig. 1 bis 3 übereinstimmt. Einander entsprechende Bauelemente sind durch ein um 100 erhöhtes Bezugszeichen gekennzeichnet. Die aktive Schwenkdämpfung erfolgt mit Hilfe elektrisch ansteuerbarer, scheibenförmiger Piezoelemente 24, mit denen die Zwischenschichten 120 belegt, z.B. verklebt sind, so daß die Flächendehnung der Zwischenschichten 120 und damit die Schubverzerrungsverteilung der Elastomerschichten 116 aktiv durch äußere elektrische Steuerkommandos beeinflußbar ist. Zur selbsttätigen Ansteuerung der piezoelektrischen Scheiben 24 sind an der Tragholmstruktur 106 Sensoren 26 angeordnet, die das zeitabhängige Schwenkbiegeverformungsverhalten des Tragholms 106 erfassen und an eine zentrale Steuereinheit 28 weitermelden, welche die Sensorsignale nach Maßgabe eines vorgegebenen Steuerprogramms oder eines Datenkennfeldes in entsprechende, zur Schwenkeigenform passende Steuerkommandos für die einzelnen piezoelektrischen Scheiben 24 umsetzt. Auf diese Weise läßt sich die Dämpfung des Tragholms 106 wesentlich verbessern. So wird die aktive Schubverzerrung insbesondere bei Hubschraubern wegen der geringen Eigendämpfung des Rotors dann benötigt, wenn der Rotor gerade wenig Schub erzeugt und die passive Schubverzerrung der elastomeren Einzeldämpfer 114 gering ist. Im übrigen ist die Bau- und Funktionsweise des Rotorblattanschlusses gemäß Fig. 4 die gleiche wie bei den oben beschriebenen Ausführungsbeispielen.

## Patentansprüche

1. Rotorblattanschluß, insbesondere für einen Hubschrauber, mit einem den auftriebserzeugenden Flügelabschnitt (2) des Rotorblatts flieh- und querkraft- sowie biege- und torsionsmomentübertragend mit der Rotornabe (4) verbindenden, drill- und zumindest in einer Hauptebene biegeelastischen Tragholm (6) und einer diesem zugeordneten, wechselweise aus Elastomer- und in Richtung der Flächenerstreckung steifen Zwischenschichten aufgebauten Dämpfungseinrichtung für die Biegeschwingungen des Tragholms,
**dadurch gekennzeichnet, daß**
die Dämpfungseinrichtung aus einer Vielzahl separater, mit ihren Elastomer- und Zwischenschichten (16, 20) in Richtung der Hauptbiegeebene (S) des Tragholms (6) angeordneter Einzeldämpfer (14) besteht, die jeweils in die Tragholmstruktur in vom Außenrand ins Tragholminnere im wesentlichen parallel zueinander verlaufenden Schlitzen (12.2) unter flächiger Bindung der beiden äußeren Elastomerschichten jedes Einzeldämpfers an die angrenzenden Tragholmabschnitte (18) integriert sind.

2. Rotorblattanschluß nach Anspruch 1,
**dadurch gekennzeichnet, daß**
die Zwischenschichten (20) der Einzeldämpfer (14) jeweils über singuläre Befestigungsstellen (22) an der Tragholmstruktur (6) fixiert sind.

3. Rotorblattanschluß nach Anspruch 1 oder 2,
**dadurch gekennzeichnet, daß**
die Tragholm-Schlitze (12.2) in Holm-Längsrichtung unterteilt und in jedem Teilschlitz ein Einzeldämpfer (14) angeordnet ist.

4. Rotorblattanschluß nach einem der vorhergehenden Ansprüche,
**dadurch gekennzeichnet, daß**
die Flächendehnung der Zwischenschichten (120) elektrisch steuerbar ist.

5. Rotorblattanschluß nach Anspruch 4,
**dadurch gekennzeichnet, daß**
die Zwischenschichten (120) mit elektrisch gesteuerten Piezoelementen (24) belegt sind.

6. Rotorblattanschluß nach Anspruch 5,
**dadurch gekennzeichnet, daß**
der Tragholm (106) mit einer die Biegeschwingungen des Tragholms aufnehmenden Sensoranordnung (26) und einer die Piezoelemente (24) nach Maßgabe der Sensorsignale aktivierenden Steuereinheit (28) versehen ist.

7. Rotorblattanschluß nach einem der vorhergehenden Ansprüche,
**dadurch gekennzeichnet, daß**
die elastomeren Einzeldämpfer (14) in Schwenkbiegerichtung des Tragholms (6) wirkend angeordnet sind.

8. Rotorblattanschluß nach einem der vorhergehenden Ansprüche,
**dadurch gekennzeichnet, daß**
der Tragholm (6) und die Zwischenschichten (20) aus Faserverbundwerkstoff bestehen.

## Claims

1. Rotor blade connection, in particular for a helicopter, with a load-carrying spar (6) which connects the lift-generating wing portion (2) of the rotor blade to the rotor hub (4) so as to transmit centrifugal and lateral forces as well as bending and torsional moments and can twist elastically and bend elastically at least in a principal plane, and a damping device which is associated with this spar for its bending oscillations, and is composed alternately of elastomer layers and intermediate layers, which are stiff in the direction of the superficial extent,
**characterised in that**
the damping device consists of a plurality of separate individual dampers (14) which are disposed with their elastomer and intermediate layers (16, 20) in the direction of the principal bending plane (S) of the load-carrying spar (6) and are in each case integrated into the load-carrying spar structure in slots (12.2), which extend substantially parallel to one another from the outer edge into the interior of the load-carrying spar, with flat bonding of the two outer elastomer layers of each individual damper to the adjacent load-carrying spar portions (18).

2. Rotor blade connection according to Claim 1,
**characterised in that**
the intermediate layers (20) of the individual dampers (14) are in each case fixed to the load-carrying spar structure (6) via isolated fastening points (22).

3. Rotor blade connection according to Claim 1 or 2,
**characterised in that**
the load-carrying spar slots (12.2) are divided in the longitudinal direction of the spar, and an individual damper (14) is disposed in each sub-slot.

4. Rotor blade connection according to any one of the preceding Claims,
**characterised in that**
the superficial extension of the intermediate layers (120) can be electrically controlled.

5. Rotor blade connection according to Claim 4,
**characterised in that**
the intermediate layers (120) are covered with electrically controlled piezoelectric elements (24).

6. Rotor blade connection according to Claim 5,
**characterised in that**
the load-carrying spar (106) is provided with a sensor arrangement (26), which picks up the bending oscillations of the load-carrying spar, and a control unit (28), which activates the piezoelectric elements (24) according to the sensor signals.

7. Rotor blade connection according to any one of the preceding Claims,
**characterised in that**
the elastomeric individual dampers (14) are disposed so as to act in the tilting bending direction of the load-carrying spar (6).

8. Rotor blade connection according to any one of the preceding Claims,
**characterised in that**
the load-carrying spar (6) and the intermediate layers (20) consist of fibre-composite material.

## Revendications

1. Raccordement de pale de rotor, notamment pour un hélicoptère, comprenant un longeron de support (6) élastique en torsion et, du moins dans un plan principal, en flexion, reliant le segment d'aile (2) de la pale de rotor générateur de la sustentation au moyeu de rotor (4) de manière à transmettre les forces centrifuges et transversales ainsi que les couples de flexion et de torsion, et un dispositif amortisseur associé au longeron de support et constitué d'une alternance de couches en élastomère et, en direction de l'étendue de surface, de couches intermédiaires rigides pour les oscillations de flexion du longeron de support,
**caractérisé en ce que**
le dispositif amortisseur comprend une multitude d'amortisseurs individuels (14) séparés, disposés avec leurs couches en élastomère et intermédiaires (16, 20) en direction du plan de flexion principal (S) du longeron de support (6), et qui sont respectivement intégrés dans la structure du longeron de support dans ses fentes (12.2) s'étendant depuis le bord extérieur vers l'intérieur du longeron de support, pour l'essentiel parallèlement les unes aux autres, les deux couches en élastomère de chaque amortisseur individuel étant reliées par toute leur surface aux segments de longeron de support (18) adjacents.

2. Raccordement de pale de rotor selon la revendication 1,
**caractérisé en ce que**
les couches intermédiaires (20) des amortisseurs individuels (14) sont respectivement fixées à la structure de longeron de support (6) à l'aide de points de fixation singuliers (22).

3. Raccordement de pale de rotor selon la revendication 1 ou 2,
**caractérisé en ce que**
les fentes de longeron de support (12.2) sont subdivisées dans la direction longitudinale du longeron, un amortisseur individuel (14) étant disposé dans chacune des fentes partielles.

4. Raccordement de pale de rotor selon l'une quelconque des revendications précédentes,
**caractérisé en ce que**
la dilatation de surface des couches intermédiaires (120) est commandée électriquement.

5. Raccordement de pale de rotor selon la revendication 4,
**caractérisé en ce que**
les couches intermédiaires (120) sont recouvertes par des piézo-éléments commandés électriquement.

6. Raccordement de pale de rotor selon la revendication 5,
**caractérisé en ce que**
le longeron de support (106) est muni d'un ensemble capteur (26) absorbant les oscillations de flexion du longeron de support, et d'une unité de commande (28) activant les piézo-éléments (24) en fonction des signaux de capteur.

7. Raccordement de pale de rotor selon l'une quelconque des revendications précédentes,
**caractérisé en ce que**
les amortisseurs individuels (14) en élastomère sont disposés pour agir dans la direction de pliage du longeron de support (6).

8. Raccordement de pale de rotor selon l'une quelconque des revendications précédentes,
**caractérisé en ce que**
le longeron de support (6) et les couches intermédiaires (20) sont réalisés à partir d'un matériau composite renforcé par des fibres.
